# EUROPÄISCHE PATENTANMELDUNG

(11) **EP 4 700 324 A1**
(43) Veröffentlichungstag der Anmeldung: **25.02.2026**
(21) Anmeldenummer: 25176922.0
(22) Anmeldetag: 16.05.2025
(51) Int. Cl.: F41G 5/08, F41H 13/00, G01S 7/481, G01S 7/486, G01S 7/499, G01S 17/66, G01S 7/495

(54) **LASERWAFFE UND VERFAHREN ZUR ERFASSUNG EINES ZIELOBJEKTS**

(30) Priorität: 23.08.2024 DE 102024002739
(71) Anmelder: MBDA Deutschland GmbH, 86529 Schrobenhausen (DE)
(72) Erfinder: MARCHI, Gabriele, 81669 München (DE); SCHOBER, Wolfgang, 86554 Pöttmes (DE); REISER, Axel, 85229 Markt Indersdorf (DE); ZOZ, Jürgen, 86316 Friedberg (DE)
(74) Vertreter: Isarpatent

(57) **Zusammenfassung**

Die vorliegende Erfindung betrifft eine Laserwaffe (1), mit einer

Laserausrichtungseinrichtung (2), welche dazu ausgebildet ist, einen Wirklaserstrahl (3) zum Bestrahlen eines Zielobjekts (4) auszurichten, mit einer Erfassungseinrichtung (5), welche zur Erfassung von dem Zielobjekt reflektierter optischer Strahlung (6) ausgebildet ist, und mit einer Steuereinrichtung (7), welche mit der Laserausrichtungseinrichtung und der Erfassungseinrichtung verbunden ist, und welche dazu ausgelegt ist, eine Position des Zielobjekts anhand der reflektierten optischen Strahlung zu bestimmen und die Laserausrichtungseinrichtung basierend auf der bestimmten Position des Zielobjekts anzusteuern, wobei die Erfassungseinrichtung eine Filtereinrichtung (8) aufweist, welche dazu ausgebildet ist, ein von dem Wirklaserstrahl auf dem Zielobjekt verursachtes Prozessleuchten (9) abzublenden. Die Erfindung betrifft außerdem ein entsprechendes Verfahren zur Erfassung eines Zielobjekts mit einer Laserwaffe.

## Beschreibung

### TECHNISCHES GEBIET DER ERFINDUNG

Die vorliegende Erfindung betrifft eine Laserwaffe und ein Verfahren zur Erfassung eines Zielobjekts mit einer Laserwaffe.

### HINTERGRUND DER ERFINDUNG

Um mit einer Laserwaffe eine ausreichende Wirkung auf einem Ziel zu erzeugen, sollte die Position des Laserspots relativ zum Ziel für einige Sekunden fast konstant gehalten werden. Daher sollten Richtsysteme der Laserwaffe fähig sein, das Ziel mit ausreichender Genauigkeit während der gesamten Dauer der Bekämpfung zu verfolgen. Die Verfolgung oder Nachführung des Ziels erfolgt meistens durch Kameras und anderen Sensoren. Während der Bestrahlung des Ziels mit dem Hochenergielaser werden Materialien des Ziels zu einer hohen Temperatur aufgeheizt, was ein Prozessleuchten verursacht. Das heißt, dass die vom Laser getroffene Stelle eine starke Bestrahlung bei verschiedenen Wellenlänge emittiert. Diese Bestrahlung ist üblicherweise so stark, dass sie den oder die Sensoren für das Nachführen des Ziels überstrahlt, sodass die Verfolgung des Ziels gestört oder unterbrochen wird. Obwohl der Laserspot auf dem Ziel im Vergleich zum Ziel selbst sehr klein ist, überfluten die durch die Strahlung angeregten Elektronen der überbelichteten Pixel die benachbarten Pixel auf der Sensorfläche der Kamera. So werden größere Teile des Bildes verblendet und eine genaue Zielnachführung schwierig.

Typische Lösungen zu diesem Problem ist die Anwendung eines Beleuchtungslasers, der das Ziel mit intensivem monochromatischen Licht bestrahlt. Ein schmaler Farbfilter wird dann angewendet, um die Beleuchtungsrückstrahlung von den anderen Signalen vor der Kamera zu trennen. So erreicht nur das Licht vom Beleuchtungslaser die Kamera.

Diese Lösung addiert aber viel Komplexität und Gewicht zum System und gibt dem Ziel eine Warnung. Mit spezifischeren Gegenmaßnahmen, wie Materialien, die absorbierend in der spezifischen Wellenlänge des Beleuchtungslasers sind, ist es möglich, das Nachführen ineffektiv zu machen. Zusätzlich wird das Blickfeld dadurch auch reduziert, was das Nachführen noch schwieriger macht. Außerdem erschweren Sicherheitsstandards für die Augensicherheit die Tests und Anwendung solch eines Beleuchtungslasersystem.

Der Artikel Ritt et al. "Evaluation of protection measures against laser dazzling for imaging sensors" Optical Engineering Vol. 56(3), 033108 (2017) beschreibt verschiedene Maßnahmen zur Filterung von Laserlicht mittels spektralen oder räumlichen Methoden.

### ZUSAMMENFASSUNG DER ERFINDUNG

Es ist Aufgabe der vorliegenden Erfindung, eine verbesserte Laserwaffe bereitzustellen, die eine verbesserte Zielerfassung und Nachführung bereitstellt.

Erfindungsgemäß wird diese Aufgabe jeweils durch die Gegenstände der unabhängigen Ansprüche gelöst.

Gemäß einem ersten Aspekt der Erfindung ist eine Laserwaffe vorgesehen. Die Laserwaffe umfasst eine Laserausrichtungseinrichtung, welche dazu ausgebildet ist, einen Wirklaserstrahl zum Bestrahlen eines Zielobjekts auszurichten, eine Erfassungseinrichtung, welche zur Erfassung von dem Zielobjekt reflektierter optischer Strahlung ausgebildet ist, und eine Steuereinrichtung, welche mit der Laserausrichtungseinrichtung und der Erfassungseinrichtung verbunden ist, und welche dazu ausgelegt ist, eine Position des Zielobjekts anhand der reflektierten optischen Strahlung zu bestimmen und die Laserausrichtungseinrichtung basierend auf der bestimmten Position des Zielobjekts anzusteuern, wobei die Erfassungseinrichtung eine Filtereinrichtung aufweist, welche dazu ausgebildet ist, ein von dem Wirklaserstrahl auf dem Zielobjekt verursachtes Prozessleuchten abzublenden.

Gemäß einem zweiten Aspekt der Erfindung ist ein Verfahren zur Erfassung eines Zielobjekts mit einer Laserwaffe vorgesehen. Das Verfahren zur Erfassung eines Zielobjekts mit einer Laserwaffe umfasst ein Detektieren eines Zielobjekts, Ermitteln einer Richtung und eines Abstands der Laserwaffe zum Zielobjekt, ein Ausrichten und Fokussieren eines Wirklaserstrahls in der ermittelten Richtung zum Bestrahlen des Zielobjekts, ein Erfassen des Zielobjekt anhand optischer Strahlung mit einer Erfassungseinrichtung, ein Ermitteln einer Position des Zielobjekts basierend auf der optischen Strahlung, ein Nachführen des Zielobjekts basierend auf der optischen Strahlung mit der Laserausrichtungseinrichtung, ein Einstellen einer Filtereinrichtung der Erfassungseinrichtung anhand des ermittelten Abstands, so dass die Filtereinrichtung ein von dem Wirklaserstrahl auf dem Zielobjekt verursachtes Prozessleuchten abblendet, und ein Ausrichten und Fokussieren des Wirklaserstrahls auf das Zielobjekt basierend auf der bestimmten Position des Zielobjekts.

Eine der vorliegenden Erfindung zugrunde liegende Idee besteht darin, eine Nachführung zu verwenden, welche grundsätzlich ohne eine weitere direkte Beleuchtung vom Lasersystem auskommt. So reichen im Wesentlichen gewöhnliche Beleuchtungsmitteln wie Lampen, Scheinwerfer, oder tagsüber auch das Sonnenlicht aus, welche die Intensität des Prozessleuchtens nicht übersteigen. Anstatt einer engen spektralen Filterung wird eine räumliche Filterung vorgenommen, um das Prozessleuchten abzublenden oder auszublenden, damit ein Bild des Zielobjekts erfasst werden kann, das nicht überbelichtet ist.

So kann mit einer relativ einfachen optischen Filtereinrichtung eine Abschattung mit geeigneten Dimensionen zur Filterung des Prozessleuchtens bereitgestellt werden. Die Abschattung soll idealerweise nur die Abbildung des Laserspots, also das Prozessleuchten im Bild des Zielobjekts abdecken. Dazu können Lösungen gemäß dem Prinzip des Koronograph angewendet werden, wie es in der Astronomie zum Unterdrücken von Sonnen- oder Sternenlicht verwendet wird, um naheliegende Objekten wie Sonnenatmosphäre oder Exoplaneten abzubilden.

Die starken Strahlen des Prozessleuchtens werden dann blockiert und die Abbildung des Ziels wird mit einer kleinen Abschattung bei der Position des Laserspots abgeblendet. Da der Laserspot immer dieselbe Position auf dem Kamerachip oder der Sensorfläche belegt und damit auch keiner Bewegung durch Turbulenz unterliegt, ist es nicht notwendig, eine dynamische Anpassung der Position der Abschattung zu implementieren, um den Spot zu verfolgen.

Ein fester Durchmesser der Abschattung kann schon für einige Entfernungen des Ziels ausreichend sein, um den Prozessleuchten zu unterdrücken und eine passive Verfolgung/Bekämpfung des Ziels zu ermöglichen.

Wie oben beschrieben handelt es sich bei der am Zielobjekt reflektierten Strahlung zur Abbildung des Zielobjekts prinzipiell um reflektierte Strahlung, die von Umgebungslichtquellen, z.B. Straßenlampen, Sonnenstrahlen oder anderer Strahlen handelt. Somit benötigt die hier vorgestellte Laserwaffe keinen Bestrahlungslaser zur Zielnachführung, was die Laserwaffe weniger komplex und kompakter gestaltbar macht.

Die oben genannte Laserausrichtungseinrichtung umfasst nicht nur eine Einrichtung zum Ausrichten des Wirklaserstrahls, sondern auch den Wirklaserstrahl erzeugenden Laser sowie das damit verbundene optische System. Der Laser ist in der Regel ein gepulster Hochleistungs- bzw. Hochenergielaser, der typischerweise mit einer Wellenlänge im nahen Infrarotbereich oszilliert, ist aber auch solche Laser nicht beschränkt.

Vorteilhafte Ausführungsformen und Weiterbildungen ergeben sich aus den auf die unabhängigen Ansprüche rückbezogenen Unteransprüchen sowie aus der Beschreibung unter Bezugnahme auf die Figuren.

Gemäß einer Ausführungsform ist die Filtereinrichtung dazu ausgebildet, das Prozessleuchten größenabhängig abzublenden. Wenn die zu bekämpfenden Ziele in einem größeren Entfernungsbereich verteilt sind, kann die Anwendung eines festen Abschattungsgroße limitierend sein, da entfernte Ziele ganz von der Abschattung bedeckt werden könnten. Anderseits kann die Abbildung des Laserspots auf nahe Ziele größer sein als die Abschattung selbst. Eine Variabilität der Abschattungsgröße ist deswegen erwünscht. So kann das Prozessleuchten in Abhängigkeit der Entfernung zum Zielobjekt einstellbar abgeblendet werden.

Gemäß einer Ausführungsform weist die Filtereinrichtung ein optisches Erfassungssystem auf, welches dazu ausgebildet ist, ein Zwischenbild des Zielobjekts in einer Zwischenbildebene auf einer optischen Achse des optischen Erfassungssystems zu erzeugen. Die Zwischenbildebene ermöglicht eine Manipulation des Bildes des Zielobjekts auf einfache Weise vorzunehmen.

Gemäß einer Ausführungsform ist ein räumliches Filterelement in der Zwischenbildebene angeordnet ist, wobei das räumliche Filterelement zumindest eine Abblende, insbesondere angeordnet auf der optischen Achse, aufweist. Das räumliche Filterelement des optischen Erfassungssystems kann dabei eine überwiegend transparente Platte oder ein planer oder gekrümmter Spiegel sein. Die Abblende kann in seiner Form und Größe so gestaltet werden, dass es das Prozessleuchten optimal ausblendet und so ein klares Bild des Zielobjekts entsteht.

Gemäß einer Ausführungsform weist das optische Erfassungssystem zwei räumliche Filterelemente mit jeweiliger Abblende auf, welche entlang der optischen Achse verschiebbar ausgebildet sind. Auf diese Weise kann das Prozessleuchten größenabhängig, das heißt, abhängig von der Entfernung und/oder intensitätsabhängig ausgeblendet werden.

Gemäß einer Ausführungsform sind die zwei räumlichen Filterelemente um die Zwischenbildebene angeordnet. Dies ist eine besonders einfach zu realisierende Anordnung im optischen Erfassungssystem.

Gemäß einer Ausführungsform ist eine Filterplatte mit einer Mehrzahl an räumlichen Filterelementen mit Abblenden verschiedener Größen in der Zwischenbildebene angeordnet. Die Mehrzahl an räumlichen Filterelemente ist wechselbar auf die optische Achse anordenbar. Zum Wechseln der Filterelemente kann die Filterplatte drehbar gelagert sein. Auch hier kann die Filterplatte als planer oder gekrümmter Spiegel ausgebildet sein. Durch das Wechseln der Filterelemente kann die Abblende größenabhängig an das Prozessleuchten angewendet werden, wodurch dieses entfernungs- und/oder intensitätsabhängig abgeblendet werden kann.

Gemäß einer Ausführungsform weist das optische Erfassungssystem ein Zoomelement auf, welches angeordnet und ausgebildet ist, die Größe des Zwischenbildes in der Zwischenbildebene zu variieren. Durch Einstellen des Zoomelements, was in der Regel durch eine Veränderung der Distanzen der Einzellinsen des Zoomelements untereinander realisiert wird, ist es möglich, das Prozessleuchten im Bild des Zielobjekts in der Zwischenbildebene an die Größe der Abblende einzustellen.

Gemäß einer Ausführungsform ein optischer Lichtmodulator in der Bildzwischenebene angeordnet ist. Mit Lichtmodulator ist hier ein Raummodulator gemeint, der eine räumliche Modulation durch Adressierung von einzelnen Bildelementen bzw. Pixels erreicht. Prominente Lichtmodulatoren sind ein auf Flüssigkristallen basierter räumlicher Polarisationsmodulator oder ein "Microelectromechanical System" (MEMS) Spiegelmodulator. Der hier genannte Lichtmodulator ist aber nicht auf diese Modulatoren begrenzt.

Mit einem solchen Licht- oder Raummodulator kann das Zwischenbild des Zielobjekts direkt manipuliert, beispielsweise phasenmoduliert werden, sodass das Prozessleuchten beispielsweise durch Polarisationsveränderung in Verbindung mit einem Polarisator einfach abzublenden ist. Ferner kann der optische Lichtmodulator auch als Amplitudenmodulator ausgebildet sein, sodass sich das Prozessleuchten im Zwischenbild unmittelbar mit dem optischen Lichtmodulator durch Adressierung entsprechender Bildelemente bzw. Pixels des optischen Lichtmodulators abblenden lässt.

Gemäß einer Ausführungsform weist das optische Erfassungssystem einen Polarisator auf. Weiterhin kann in Verbindung mit einem optischen Lichtmodulator angeordnet in der Zwischenbildebene das Zwischenbild des Zielobjekts derart manipuliert werden, dass das Prozessleuchten durch Adressierung entsprechender Bildelement des optischen Lichtmodulators abgeblendet wird.

Gemäß einer Ausführungsform ist ein selbsttönendes Filterelement in der Zwischenbildebene angeordnet ist. Das Material des selbsttönenden Filterelements ändert seine Transmissionseigenschaften abhängig von der Intensität des Lichts. Das Prozessleuchten im Zwischenbild erfährt eine deutlich höhere Intensität als der Rest des Materials und wird deswegen eine deutliche reduzierte Transmission einstellen. Bei dieser Realisierung dimensioniert und positioniert sind die Abschattung selbst. Somit ist es möglich, dass das Prozessleuchten automatisch durch das selbsttönende Filterelement abgeblendet wird.

Gemäß einer Ausführungsform weist die Erfassungseinrichtung eine Kamera mit einer Sensorfläche auf, welche eine Vielzahl von Bildelementen aufweist, wobei die Sensorfläche derart angeordnet ist, dass das Zielobjekt auf der Sensorfläche abgebildet wird. Ein Abbild des Zielobjekts auf der Sensorfläche ermöglicht die Manipulation des aufgenommenen Bildes durch direkte Adressierung der Bildelemente der Sensorfläche. Beispielsweise kann eine Verstärkung (Gain) entsprechend der Belichtung des jeweiligen Bildelements geregelt werden.

Gemäß einer Ausführungsform weist die Erfassungseinrichtung eine Steuerungseinrichtung auf, welche dazu ausgebildet ist, ein oder mehrere Bildelemente eines Teilbereichs der Sensorfläche, insbesondere basierend auf er eintreffenden Intensität, auszuschalten. Hiermit kann das Prozessleuchten ohne zusätzliche Optik effektiv und größenabhängig abgeblendet werden. Ferner senkt dies den Stromverbrauch der Erfassungseinrichtung.

Gemäß einer Ausführungsform wird das Zielobjekt 4 mit einer zusätzlichen Lichtquelle beleuchtet. Die zusätzliche Lichtquelle kann dabei ein Beleuchtungslaser oder eine Lampe sein. Dadurch verbessert sich die Sichtbarkeit des Zielobjekts, wodurch es besser erkannt und nachgeführt werden kann.

Die obigen Ausführungsformen und Weiterbildungen lassen sich, sofern sinnvoll, beliebig miteinander kombinieren. Insbesondere sind Merkmale der Laserwaffe auf das Verfahren zur Erfassung eines Zielobjekts mit einer Laserwaffe anwendbar, und umgekehrt. Weitere mögliche Ausführungsformen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: eine schematische Abbildung einer Laserwaffe gemäß einer Ausführungsform der vorliegenden Erfindung;
- Fig. 2: eine schematische Abbildung einer Laserwaffe gemäß einer weiteren Ausführungsform der vorliegenden Erfindung;
- Fig. 3: eine schematische Abbildung einer Laserwaffe gemäß einer weiteren Ausführungsform der vorliegenden Erfindung;
- Fig. 4a-b: schematische Abbildungen einer Laserwaffe gemäß einer weiteren Ausführungsform der vorliegenden Erfindung;
- Fig. 5: eine schematische Abbildung einer Laserwaffe gemäß einer weiteren Ausführungsform der vorliegenden Erfindung;
- Fig. 6: eine schematische Abbildung einer Laserwaffe gemäß einer weiteren Ausführungsform der vorliegenden Erfindung;
- Fig. 7: eine schematische Abbildung einer Laserwaffe gemäß einer weiteren Ausführungsform der vorliegenden Erfindung;
- Fig. 8: eine schematische Abbildung einer Laserwaffe gemäß einer weiteren Ausführungsform der vorliegenden Erfindung;
- Fig. 9: eine schematische Abbildung einer Laserwaffe gemäß einer weiteren Ausführungsform der vorliegenden Erfindung; und
- Fig. 10: ein Flussdiagramm eines Verfahrens zur Erfassung eines Zielobjekts mit einer Laserwaffe gemäß einer Ausführungsform der vorliegenden Erfindung.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

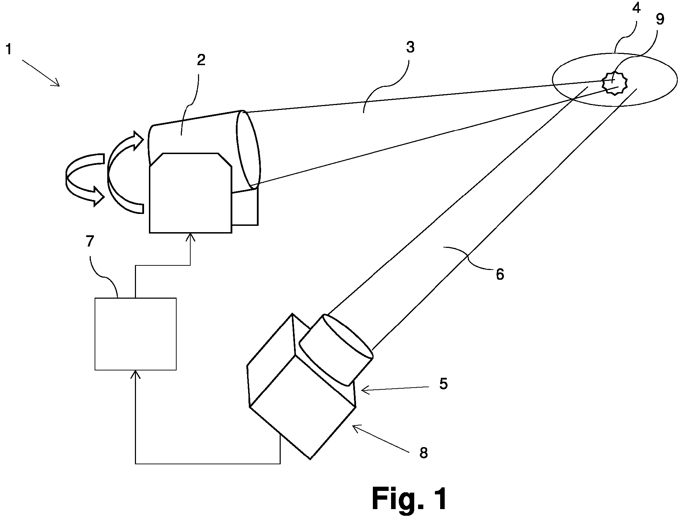

Fig. 1 zeigt eine schematische Abbildung einer Laserwaffe 1 gemäß einer Ausführungsform der vorliegenden Erfindung.

Die in Fig. 1 gezeigte Laserwaffe 1 umfasst eine Laserausrichtungseinrichtung 2. Die Laserausrichtungseinrichtung 2 ist dazu ausgebildet, einen Wirklaserstrahl 3 eines Wirklasers (nicht gezeigt) zum Bestrahlen eines Zielobjekts 4 auszurichten. Dazu enthält die Laserausrichtungseinrichtung 2 entsprechende Einrichtungen, insbesondere eine Nachführungseinrichtung mit einem gekoppelten optischen System, welches den von einem Laser erzeugten Wirklaserstrahl 3 auf das Zielobjekt 4 richtet. Diese Einrichtungen sind der besseren Übersicht halber nicht in dieser und den nachfolgenden Figuren gezeigt. Der Laser zur Emission des Wirklaserstrahls 3 ist in der Regel ein gepulster Hochleistungs- bzw. Hochenergielaser, der typischerweise mit einer Wellenlänge im nahen Infrarotbereich oszilliert, aber nicht auf einen solchen Laser begrenzt.

Die Laserwaffe 1 umfasst eine Erfassungseinrichtung 5, welche zur Erfassung von dem Zielobjekt 4 reflektierter optischer Strahlung 6 ausgebildet ist. Die Erfassungseinrichtung 5 enthält somit zumindest einen optischen Detektor zur Umwandlung der reflektierten Strahlung in ein elektrisches Signal. Die Erfassungseinrichtung 5 weist außerdem eine Filtereinrichtung 8 auf. Die Filtereinrichtung 8 ist dazu ausgebildet, ein von dem Wirklaserstrahl 3 auf dem Zielobjekt 4 verursachtes Prozessleuchten 9 abzublenden. Wie weiter oben beschrieben kann die an dem Zielobjekt 4 reflektierte optische Strahlung 6 von Umgebungslichtquellen, z.B. Straßenlampen, Sonnenstrahlen oder anderer Strahlen stammen. Es kann sich aber auch um reflektierte Strahlung des Wirklaserstrahls 3 handeln, der am Zielobjekt 4 ohne spektrale Umwandlung reflektiert wird.

Die Laserwaffe 1 umfasst außerdem eine Steuereinrichtung 7, welche mit der Laserausrichtungseinrichtung 2 und der Erfassungseinrichtung 5 verbunden ist. Die Steuereinrichtung 7 ist dazu ausgelegt, eine Position des Zielobjekts 4 anhand der reflektierten optischen Strahlung zu bestimmen. Ferner ist die Steuereinrichtung 7 dazu ausgelegt, die Laserausrichtungseinrichtung 2 basierend auf der bestimmten Position des Zielobjekts 4 anzusteuern.

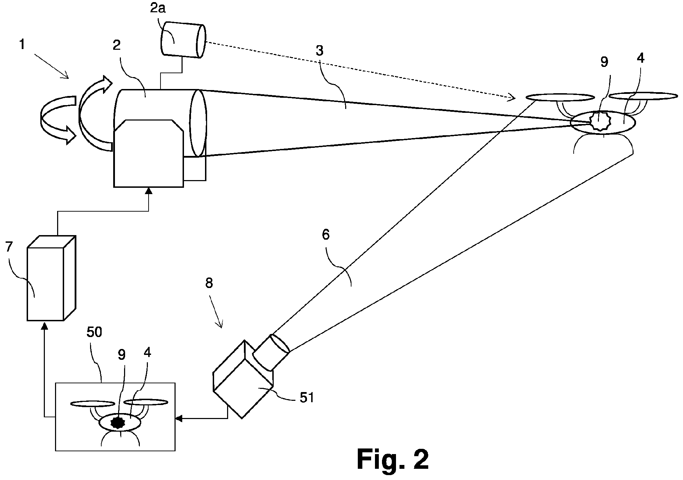

Fig. 2 zeigt eine schematische Abbildung einer Laserwaffe 1 gemäß einer weiteren Ausführungsform der vorliegenden Erfindung. Die hier beschriebene Ausführungsform der Laserwaffe 1 ist mit der zuvor beschriebenen Ausführungsform der Laserwaffe 1 kompatibel.

In dieser Darstellung einer Ausführungsform der Laserwaffe ist das aufgenommene Abbild oder Bild 50 des Zielobjekts 4 dargestellt. Man kann in Fig. 2 erkennen, dass das Prozessleuchten 9 in dem Bild 50 durch die Filtereinrichtung 8 abgedeckt ist, sodass das Zielobjekt 4 in dem Bild 50 klar zu erkennen ist. Solch ein Bild 50 wird in dieser Ausführungsform mit einer Kamera 51 der Erfassungseinrichtung 5 aufgenommen. Anhand dieses Bildes 50 ist es möglich, die genaue Position des Zielobjekts 4 zu bestimmen und die Laserausrichtungseinrichtung 2 entsprechend anzusteuern, sodass der Wirklaserstrahl 3 effektiv das Zielobjekt 4 bestrahlt. Zur besseren Sichtbarkeit des Zielobjekts 4 kann eine zusätzliche Lichtquelle 2a eingeschaltet werden. Diese kann ein Beleuchtungslaser oder eine Lampe sein.

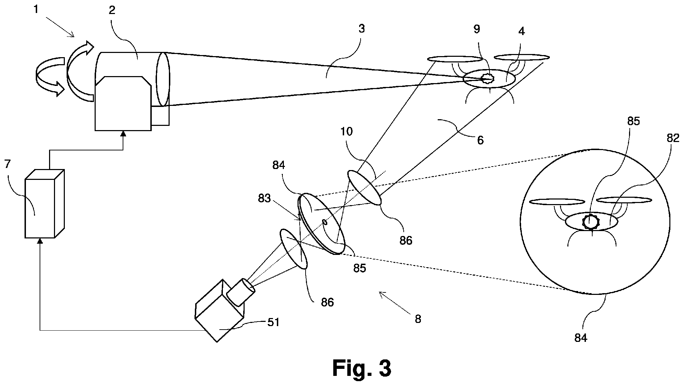

Fig. 3 zeigt eine schematische Abbildung einer Laserwaffe gemäß einer weiteren Ausführungsform der vorliegenden Erfindung. Die hier beschriebene Ausführungsform der Laserwaffe 1 ist mit den zuvor beschriebenen Ausführungsformen der Laserwaffe 1 kompatibel.

Die Filtereinrichtung 8 weist ein optisches Erfassungssystem 81 auf, welches dazu ausgebildet ist, ein Zwischenbild 82 des Zielobjekts 4 in einer Zwischenbildebene 83 auf einer optischen Achse 10 des optischen Erfassungssystems 81 zu erzeugen.

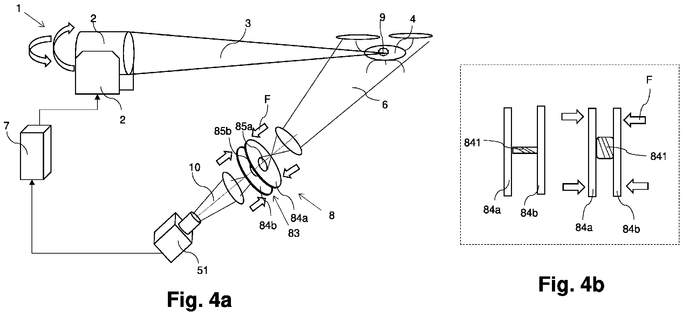

In Fig. 3 ist zu erkennen, dass in der Zwischenbildebene 83 ein räumliches Filterelement 84 angeordnet ist. Das räumliche Filterelement 84 zumindest eine Abblende 85 angeordnet auf der optischen Achse 10 auf. Auf diese Weise wird das Prozessleuchten 9 im Zwischenbild 82 des Zielobjekts 4 abgeblendet oder ausgeblendet, wodurch ein durch die Kamera 51 erfasstes klares Bild 50 (nicht mehr gezeigt in Fig. 3 und den nachfolgenden Figuren) des Zielobjekts 4 entsteht. Fig. 4 zeigt eine schematische Abbildung einer Laserwaffe 1 gemäß einer weiteren Ausführungsform der vorliegenden Erfindung. Die hier beschriebene Ausführungsform der Laserwaffe 1 ist mit den zuvor mit Verweis auf Fig. 1 und 2 beschriebenen Ausführungsformen der Laserwaffe 1 kompatibel.

In der in Fig. 4a gezeigten Ausführungsform der Laserwaffe 1 ist die Filtereinrichtung 8 dazu ausgebildet, das Prozessleuchten 9 größenabhängig abzublenden. Das optische Erfassungssystem 81 der Laserwaffe 1 dieser Ausführungsform weist zwei räumliche Filterelemente 84a, 84b mit jeweiliger Abblende 85a, 85b auf, welche entlang der optischen Achse 10 verschiebbar ausgebildet sind. Damit können die zwei Abblenden 85a, 85b durch Verschiebung entlang der Achse eine größenabhängige Abschattung geschaffen werden. Die zwei räumlichen Filterelemente 84a, 84b sind um die Zwischenbildebene 83 angeordnet, sodass das Prozessleuchten 9 im Zwischenbild 82 des Zielobjekts 4 abhängig von der Entfernung zur Laserwaffe 1 effektiv abgeblendet werden kann.

In bestimmten Ausführungsformen kann zur Realisierung der Abblende 85 ein absorbierendes elastisches Material 841 zwischen den Filterelementen 84a, 84b angeordnet sein, wie in Fig. 4b ebenso gezeigt ist. Hier sind die Filterelementen 84a, 84b transparent ausgebildet, beispielsweise aus Glass. Bei Annäherung der zwei Filterelementen 84a, 84b ändert sich die transversale Dimension des absorbierenden elastischen Materials 841 durch Kompression. Die Kompression wird durch eine äußere Kraft F erzeugt, die auf die Filterelemente 84a, 84b ausgeübt wird, wie in Fig. 4 gezeigt wird. Bewegen sich die Filterelementen 84a, 84b nun voneinander weg, ändert sich die transversale Dimension des absorbierenden elastischen Materials 841 durch Dehnung. So kann eine Größenanpassung der Abblende 85 und damit der Abschattung des Prozessleuchtens 9 erreicht werden.

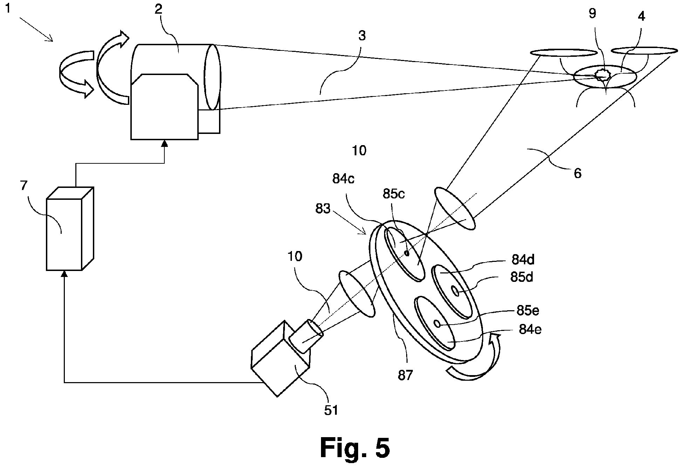

Fig. 5 zeigt eine schematische Abbildung einer Laserwaffe 1 gemäß einer weiteren Ausführungsform der vorliegenden Erfindung. Die hier beschriebene Ausführungsform der Laserwaffe 1 ist mit den zuvor mit Verweis auf Fig. 1 und 2 beschriebenen Ausführungsformen der Laserwaffe 1 kompatibel.

Auch in dieser Ausführungsform der Laserwaffe 1 ist die Filtereinrichtung 8 dazu ausgebildet, das Prozessleuchten 9 größenabhängig abzublenden. Dazu ist eine Filterplatte 87 mit einer Mehrzahl an räumlichen Filterelementen 84c-e mit entsprechenden Abblenden 85c-e verschiedener Größen in der Zwischenbildebene 83 angeordnet. So kann die Mehrzahl an räumlichen Filterelemente 84c-e wechselbar auf die optische Achse angeordnet werden. In der vorliegenden Ausführungsform ist die Filterplatte 87 drehbar gelagert, sodass durch eine Drehung von einem räumlichen Filterelemente 84c-e zu einem anderen räumlichen Filterelemente 84c-e gewechselt werden kann. In Fig. 5 ist zu erkennen, dass sich das räumliche Filterelement 84c mit der Abblende 85c, welche kleiner ist als die Abblenden 85d und 85e der räumlichen Filterelemente 84d und 84e ist, auf der optischen Achse 10 befindet. Nähert sich das Zielobjekt 4 nun der Laserwaffe 1 an, so wird das Zwischenbild 82 und damit auch das Abbild des Prozessleuchtens 9 größer. Daraufhin kann durch eine Drehung auf eines der anderen räumlichen Filterelemente 84d und 84e zur Anordnung auf der optischen Achse 10 gewechselt werden. Selbstverständlich ist die Erfindung nicht auf die in Fig. 5 gezeigte kreisrunde drehbare Filterplatte 87 begrenzt. So kann die Filterplatte 87 insbesondere derart gestaltet sein, dass ein Filterelement 84c-e durch eine Translationsbewegung wechselbar angeordnet ist. Auch können Filterplatten 87 hintereinander auf der optischen Achse 10 angeordnet sein, um so eine Kombination aus der Filtereinrichtung 8 dieser Ausführungsform und der in Fig. 4 gezeigten Filtereinrichtung 8 zu realisieren.

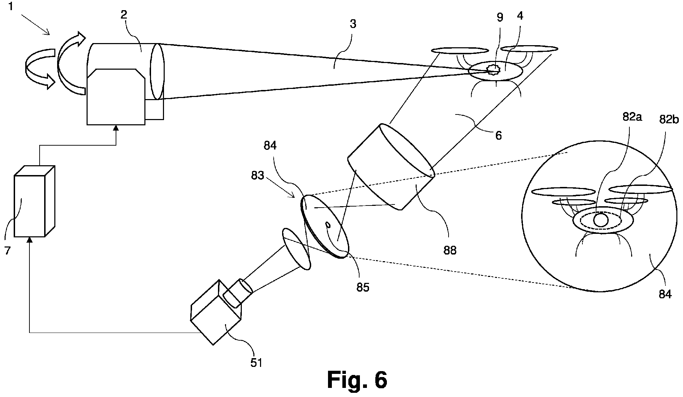

Fig. 6 zeigt eine schematische Abbildung einer Laserwaffe 1 gemäß einer weiteren Ausführungsform der vorliegenden Erfindung. Die hier beschriebene Ausführungsform der Laserwaffe 1 ist mit den zuvor mit Verweis auf Fig. 1 und 2 beschriebenen Ausführungsformen der Laserwaffe 1 kompatibel.

Auch in dieser Ausführungsform der Laserwaffe 1 ist die Filtereinrichtung 8 dazu ausgebildet, das Prozessleuchten 9 größenabhängig abzublenden. Dazu weist das optische Erfassungssystem 81 ein Zoomelement 88 auf, welches angeordnet und ausgebildet ist, die Größe des Zwischenbildes 82a, 82b in der Zwischenbildebene 83 zu variieren, wie das in der vergrößerten Darstellung des Abbilds des Zielobjekts 4 in Fig. 6 angedeutet ist. Somit ist es durch entsprechende Einstellung des Zoomelements 88 möglich, die Größe des Prozessleuchtens 9 im Zwischenbild so anzupassen, dass sie mit der Größe der Abblende 85 des Filterelements 84 übereinstimmt und eine effektive Abschattung erzeugt wird.

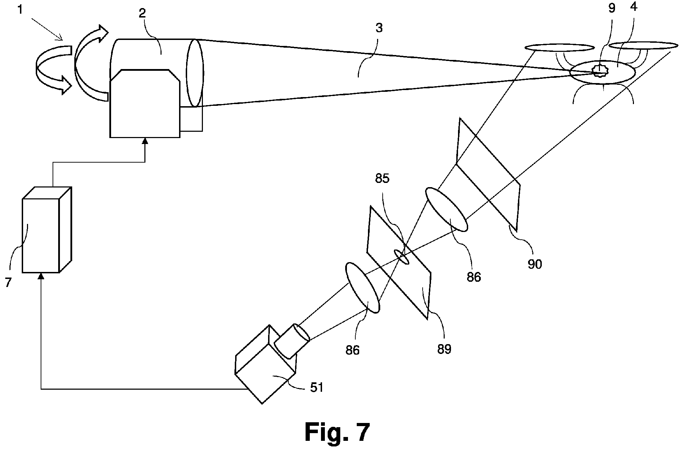

Fig. 7 zeigt eine schematische Abbildung einer Laserwaffe 1 gemäß einer weiteren Ausführungsform der vorliegenden Erfindung. Die hier beschriebene Ausführungsform der Laserwaffe 1 ist mit den zuvor mit Verweis auf Fig. 1 und 2 beschriebenen Ausführungsformen der Laserwaffe 1 kompatibel.

Auch in dieser Ausführungsform der Laserwaffe 1 ist die Filtereinrichtung 8 dazu ausgebildet, das Prozessleuchten 9 größenabhängig abzublenden. Dazu wird ein optischer Lichtmodulator 89 in der Bildzwischenebene angeordnet. Durch entsprechende Ansteuerung kann eine Fläche um die optische Achse als lichtundurchlässig gestaltet werden. Der optische Lichtmodulator 89 kann insbesondere ein räumlicher Polarisationsmodulator oder ein "Microelectromechanical System" (MEMS) Spiegelmodulator oder ein sonstiger geeigneter optischer Raummodulator sein. Die Abblende 85 als Region der Abschattung kann innerhalb der Auflösung des optischen Lichtmodulators 89 variiert werden Je nach Ausführung des Lichtmodulators, kann das optische Erfassungssystem 81 noch einen, wie in Fig. 7 gezeigt, oder mehrere Polarisatoren 90 aufweisen, die vor oder hinter dem optischen Lichtmodulator 89 angeordnet sein können, um Strahlung eines Polarisationszustandes blockieren.

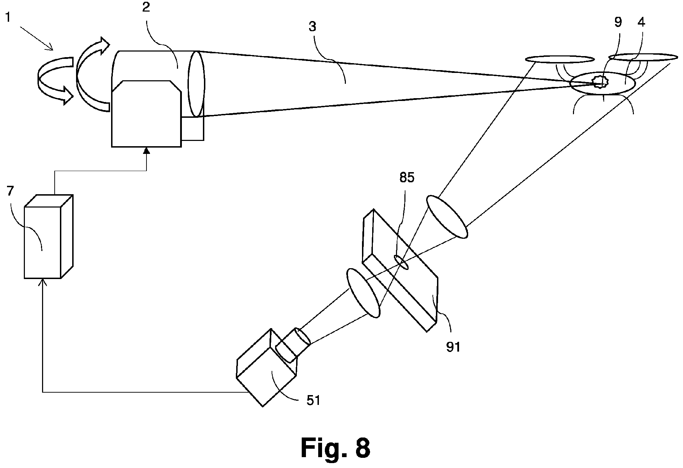

Fig. 8 zeigt eine schematische Abbildung einer Laserwaffe 1 gemäß einer weiteren Ausführungsform der vorliegenden Erfindung. Die hier beschriebene Ausführungsform der Laserwaffe 1 ist mit den zuvor mit Verweis auf Fig. 1 und 2 beschriebenen Ausführungsformen der Laserwaffe 1 kompatibel.

Auch in dieser Ausführungsform der Laserwaffe 1 ist die Filtereinrichtung 8 dazu ausgebildet, das Prozessleuchten 9 größenabhängig abzublenden. Dazu ist ein selbsttönendes Filterelement 91 in der Zwischenbildebene 83 angeordnet. Das selbsttönende Filterelement 91 ist derart ausgebildet, dass es abhängig von der Intensität der auftreffenden reflektierenden Strahlung 6 sein Absorptionsvermögen verändert. Das hat zur Folge, dass an der Stelle selbsttönenden Filterelements 91, an der das intensive Prozessleuchten 9 in der Zwischenbildebene 83 abgebildet wird, der Absorptionskoeffizient des Materials des selbsttönenden Filterelements 91 so stark erhöht wird, dass das Prozessleuchten 9 de facto ausgeblendet wird.

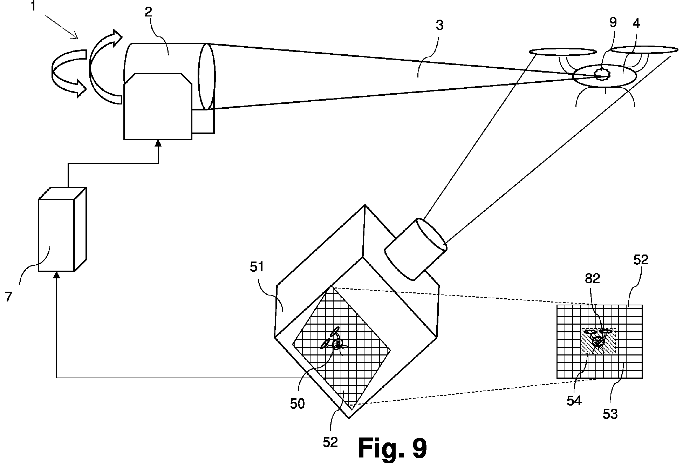

Fig. 9 zeigt eine schematische Abbildung einer Laserwaffe 1 gemäß einer weiteren Ausführungsform der vorliegenden Erfindung. Die hier beschriebene Ausführungsform der Laserwaffe 1 ist mit den zuvor mit Verweis auf Fig. 1 und 2 beschriebenen Ausführungsformen der Laserwaffe 1 kompatibel.

Auch in dieser Ausführungsform der Laserwaffe 1 ist die Filtereinrichtung 8 dazu ausgebildet, das Prozessleuchten 9 größenabhängig abzublenden.

Wie auch schon in den zuvor erläuterten Ausführungsformen der Laserwaffe 1 weist die Erfassungseinrichtung 5 eine Kamera 51 auf, welche eine Sensorfläche 52 aufweist. Die Sensorfläche 52 selbst weist eine Vielzahl von Bildelementen 53 auf. Die Sensorfläche 52 ist in der Regel derart angeordnet ist, dass das Zielobjekt 4 auf der Sensorfläche 52 in einem Bild 50 abgebildet wird. Auf diese Weise lässt sich die Position des Zielobjekts 4 am einfachsten bestimmen.

In der in Fig. 9 gezeigten Ausführungsform der Laserwaffe 1 weist die Erfassungseinrichtung 5 eine Steuerungseinrichtung (nicht gezeigt) auf, welche dazu ausgebildet ist, ein oder mehrere Bildelemente 53 eines Teilbereichs 54 der Sensorfläche 52 auszuschalten. Der Teilbereichs 54 wird bevorzugt basierend auf er eintreffenden Intensität definiert, sodass eine dem Prozessleuchten 9 im Bild 50 des Zielobjekts 4 abgeblendet oder abgeschattet wird. Durch das Ausschalten der Bildelemente 53 in dem Teilbereich 54 wird eine Überbelichtung der dem Teilbereich 54 angrenzenden Bildelemente 53 verhindert. Auf dieses Weise ist die Position des Zielobjekts 4 anhand des Bildes 50 auf der Sensorfläche 52 mit hoher Genauigkeit bestimmbar.

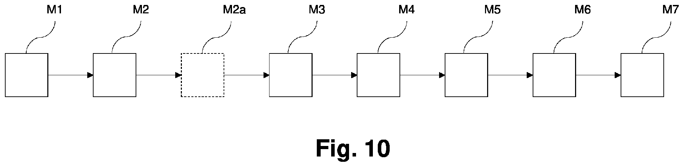

Fig. 10 zeigt ein Flussdiagramm eines Verfahrens zur Erfassung eines Zielobjekts mit einer Laserwaffe gemäß einer Ausführungsform der vorliegenden Erfindung.

In dem Verfahren zur Erfassung eines Zielobjekts 4 mit einer Laserwaffe 1 wird zunächst ein Zielobjekt 4 detektiert M1. Dies kann beispielsweise mit einem Radarsystem geschehen. Nun wird einer Richtung und eines Abstands der Laserwaffe 1 zum Zielobjekts 4 ermittelt M2. Nun wird das Zielobjekt 4 anhand optischer Strahlung mit einer Erfassungseinrichtung 5 erfasst M3. Es wird eine Position des Zielobjekts 4 basierend auf der optischen Strahlung ermittelt M4. Das Zielobjekt wird nun basierend auf der optischen Strahlung mit der Laserausrichtungseinrichtung 2 nachgeführt M5, sodass eine Abbild 50 des Zielobjekts 4 in einer vordefinierten Position einer Sensorfläche 52 des Erfassungssystems 5 gehalten wird. Diese vordefinierte Position ist normalerweise in der Mitte der Sensorfläche. Eine Filtereinrichtung 8 der Erfassungseinrichtung 5 wird anhand dem ermittelten Abstand eingestellt M6, so dass die Filtereinrichtung 8 ein von dem Wirklaserstrahl 3 auf dem Zielobjekt 4 verursachtes Prozessleuchten 9 abblendet. Das heißt, dass die Filtereinrichtung 8 wird nun von initialen Ausgangswerten mit optimalen Parametern gemäß den Informationen des ermittelten Abstands zum Zielobjekt 4 eingestellt. Anschließend wird der Wirklaserstrahls 3 auf das Zielobjekt 4 basierend auf der bestimmten Position des Zielobjekts 4 ausgerichtet und fokussiert M7. Die Erfassungseinrichtung 5 wird nicht verblendet vom Prozessleuchten 9 dank der schon eingestellten Filtereinrichtung 8. Ferner können die Informationen über die Zielbewegung des Zielobjekts 4 an dem Richtsystem bzw. Laserausrichtungseinrichtung 2 zur Erzielung des Wirklaserstrahl 3 und zur Einstellung der Filtereinrichtung 8 weiter ermittelt werden

In einem optionalen Schritt kann das Zielobjekt 4 mit einer zusätzlichen Lichtquelle 2a, wie einem Beleuchtungslaser oder einer Lampe beleuchtet werden M2a.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### BEZUGSZEICHENLISTE

- 1: Laserwaffe
- 2: Laserausrichtungseinrichtung
- 2a: zusätzliche Lichtquelle
- 3: Wirklaserstrahl
- 4: Zielobjekt
- 5: Erfassungseinrichtung
- 7: Steuereinrichtung
- 8: Filtereinrichtung
- 9: Prozessleuchten
- 10: optischen Achse
- 50: Bild, Abbild
- 51: Kamera
- 52: Sensorfläche
- 53: Bildelemente
- 54: Teilbereich
- 81: optische Erfassungssystem
- 82: Zwischenbild
- 82a, 82b: Zwischenbildes
- 83: Zwischenbildebene
- 84, 84a-e: räumliches Filterelement
- 85, 85a-e: Abblende
- 841: absorbierendes elastisches Material
- 87: Filterplatte
- 88: Zoomelement
- 89: optischer Lichtmodulator
- 90: Polarisator
- 91: selbsttönendes Filterelement

## Patentansprüche

1. Laserwaffe (1),
mit einer Laserausrichtungseinrichtung (2), welche dazu ausgebildet ist, einen Wirklaserstrahl (3) zum Bestrahlen eines Zielobjekts (4) auszurichten,
mit einer Erfassungseinrichtung (5), welche zur Erfassung von dem Zielobjekt (4) reflektierter optischer Strahlung (6) ausgebildet ist, und
mit einer Steuereinrichtung (7), welche mit der Laserausrichtungseinrichtung (2) und der Erfassungseinrichtung (5) verbunden ist, und welche dazu ausgelegt ist, eine Position des Zielobjekts (4) anhand der reflektierten optischen Strahlung zu bestimmen und die Laserausrichtungseinrichtung (2) basierend auf der bestimmten Position des Zielobjekts (4) anzusteuern,
wobei die Erfassungseinrichtung (5) eine Filtereinrichtung (8) aufweist, welche dazu ausgebildet ist, ein von dem Wirklaserstrahl (3) auf dem Zielobjekt (4) verursachtes Prozessleuchten (9) abzublenden.

2. Laserwaffe (1) nach Anspruch 1, wobei die Filtereinrichtung (8) dazu ausgebildet ist, das Prozessleuchten (9) größenabhängig abzublenden.

3. Laserwaffe (1) nach Anspruch 1 oder 2, wobei die Filtereinrichtung (8) ein optisches Erfassungssystem (81) aufweist, welches dazu ausgebildet ist, ein Zwischenbild (82) des Zielobjekts (4) in einer Zwischenbildebene (83) auf einer optischen Achse (10) des optischen Erfassungssystems (81) zu erzeugen.

4. Laserwaffe (1) nach Anspruch 3, wobei ein räumliches Filterelement (84, 84a-e) in der Zwischenbildebene (83) angeordnet ist, wobei das räumliche Filterelement (84, 84a-e) zumindest eine Abblende (85, 85a-e), insbesondere angeordnet auf der optischen Achse (10), aufweist.

5. Laserwaffe (1) nach Anspruch 3 oder 4, wobei das optische Erfassungssystem (81) zwei räumliche Filterelemente (84a, 84b) mit jeweiliger Abblende (85a, 85b) aufweist, welche entlang der optischen Achse (10) verschiebbar ausgebildet sind.

6. Laserwaffe (1) nach Anspruch 5, wobei die zwei räumlichen Filterelemente (84a, 84b) um die Zwischenbildebene (83) angeordnet sind.

7. Laserwaffe (1) nach Anspruch 3, wobei eine Filterplatte (87) mit einer Mehrzahl an räumlichen Filterelementen (84c-e) mit Abblenden (85e-c) verschiedener Größen in der Zwischenbildebene (83) angeordnet ist, wobei die Mehrzahl an räumlichen Filterelemente (84c-e) wechselbar auf die optische Achse anordenbar sind.

8. Laserwaffe (1) nach einem der Ansprüche 3 bis 7, wobei das optische Erfassungssystem (81) ein Zoomelement (88) aufweist, welches angeordnet und ausgebildet ist, die Größe des Zwischenbildes in der Zwischenbildebene (83) zu variieren.

9. Laserwaffe (1) nach Anspruch 3, wobei ein optischer Lichtmodulator (89) in der Bildzwischenebene angeordnet ist.

10. Laserwaffe (1) nach einem der Ansprüche 3 bis 9, wobei das optische Erfassungssystem (81) einen Polarisator (90) aufweist.

11. Laserwaffe (1) nach Anspruch 3, wobei ein selbsttönendes Filterelement (91) in der Zwischenbildebene (83) angeordnet ist.

12. Laserwaffe (1) nach einem der vorstehenden Ansprüche, wobei die Erfassungseinrichtung (5) eine Kamera (51) mit einer Sensorfläche (52) aufweist, welche eine Vielzahl von Bildelementen (53) aufweist, wobei die Sensorfläche (52) derart angeordnet ist, dass das Zielobjekt (4) auf der Sensorfläche (52) abgebildet wird.

13. Laserwaffe (1) nach Anspruch 12, wobei die Erfassungseinrichtung (5) eine Steuerungseinrichtung aufweist, welche dazu ausgebildet ist, ein oder mehrere Bildelemente eines Teilbereichs (54) der Sensorfläche (52), insbesondere basierend auf er eintreffenden Intensität, auszuschalten.

14. Verfahren zur Erfassung eines Zielobjekts (4) mit einer Laserwaffe (1), umfassend
Detektieren (M1) eines Zielobjekts (4);
Ermitteln (M2) einer Richtung und eines Abstands der Laserwaffe (1) zum Zielobjekts (4);
Erfassen (M3) des Zielobjekts (4) anhand optischer Strahlung mit einer Erfassungseinrichtung (5);
Ermitteln (M4) einer Position des Zielobjekts (4) basierend auf der optischen Strahlung;
Nachführen (M5) des Zielobjekts (4) basierend auf der optischen Strahlung mit der Laserausrichtungseinrichtung (2);
Einstellen (M6) einer Filtereinrichtung (8) der Erfassungseinrichtung (5) anhand des ermittelten Abstands, so dass die Filtereinrichtung (8) ein von dem Wirklaserstrahl (3) auf dem Zielobjekt (4) verursachtes Prozessleuchten (9) abblendet,
Ausrichten und Fokussieren (M7) des Wirklaserstrahls (3) auf das Zielobjekt basierend auf der ermittelten Position des Zielobjekts (4).

15. Verfahren nach Anspruch 14, mit dem zusätzlichen Schritt:
Beleuchten (2a) des Zielobjekts (4) mit einer zusätzlichen Lichtquelle (2a).
